(19) Europäisches Patentamt
European Patent Office
Office européen des brevets

(11) **EP 1 720 275 B1**

(12) **EUROPÄISCHE PATENTSCHRIFT**

(45) Veröffentlichungstag und Bekanntmachung des Hinweises auf die Patenterteilung:
**06.01.2016 Patentblatt 2016/01**

(51) Int Cl.:
***H04L 1/00*** *(2006.01)*     ***H04L 1/18*** *(2006.01)*
***H03M 13/05*** *(2006.01)*

(21) Anmeldenummer: **06112538.1**

(22) Anmeldetag: **12.04.2006**

(54) **Verfahren und Vorrichtung zum Auswählen von Korrektursymbolen**

Method and Device for selection of correction symbols

Procédé et dispositif pour la selection de symboles de correction

(84) Benannte Vertragsstaaten:
**DE GB**

(30) Priorität: **04.05.2005 DE 102005020925**

(43) Veröffentlichungstag der Anmeldung:
**08.11.2006 Patentblatt 2006/45**

(73) Patentinhaber: **QUALCOMM Incorporated**
**San Diego, CA 92121-1714 (US)**

(72) Erfinder:
- **Gasbia, Tiago**
  **80805, München (DE)**
- **Pandel, Jürgen**
  **83620, Feldkirchen-Westerham (DE)**
- **Stockhammer, Thomas**
  **83346, Bergen (DE)**
- **Xu, Wen**
  **85579, Neubiberg (DE)**

(74) Vertreter: **Samson & Partner Patentanwälte mbB**
**Widenmayerstraße 6**
**80538 München (DE)**

(56) Entgegenhaltungen:
- **MARC P C FOSSORIER: "Iterative Reliability-Based Decoding of Low-Density Parity Check Codes" IEEE JOURNAL ON SELECTED AREAS IN COMMUNICATIONS, IEEE SERVICE CENTER, PISCATAWAY, US, Bd. 19, Nr. 5, 1. Mai 2001 (2001-05-01), Seiten 908-917, XP011055370 ISSN: 0733-8716**
- **Huffman W.C., Pless V.S. (Editors): "Handbook of Coding Theory (Volume I)" 1998, ELSEVIER , XP002562274 ISBN: 0444500888 Bd. I, , Seiten 15-18 * Seite 15, Absatz 2 * * Theorem 2.7 and Proof; Seite 18 ***
- **Huffman W.C., Pless V.S. (Editors): "Handbook of Coding Theory (Volume I)" 1998, ELSEVIER , XP002564851 ISBN: 0444500888 Bd. I, , Seite 654 * das ganze Dokument ***
- **Huffman W.C., Pless V.S.: "Handbook of Coding Theory" 1998, ELSEVIER , XP002562275 ISBN: 0444500871 Bd. II, , Seite 1215 * das ganze Dokument ***
- **DIGITAL FOUNTAIN ET AL: "Specification Text for Systematic Raptor Forward Error Correction" 3GPP DRAFT; AHP238_DELTA_FILE_REPAIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG4, Nr. San Diego, USA; 20050504, 4. Mai 2005 (2005-05-04), XP050287656 [gefunden am 2005-05-04]**
- **DIGITAL FOUNTAIN ET AL: "Specification Text for Systematic Raptor Forward Error Correction" 3GPP DRAFT; AHP205_RAPTOR_ SPECIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG4, Nr. Sophia Antipolis, France; 20050331, 31. März 2005 (2005-03-31), XP050282394 [gefunden am 2005-03-31]**

• BURSHTEIN D ET AL: "An Efficient Maximum-Likelihood Decoding of LDPC Codes Over the Binary Erasure Channel" IEEE TRANSACTIONS ON INFORMATION THEORY, IEEE, US, Bd. 50, Nr. 11, 1. November 2004 (2004-11-01), Seiten 2837-2844, XP011121168 ISSN: 0018-9448

## Beschreibung

Die Erfindung betrifft ein Verfahren gemäß dem Oberbegriff des Anspruchs 1 und eine Vorrichtung gemäß dem Oberbegriff des Anspruchs 10.

Bei der Übertragung von Datenpaketen, wie z.B. Audio oder Videodaten, von einem Sender zu einem Empfänger kommt es aufgrund von Übertragungsfehler zum fehlerhaften Empfang dieser Datenpakete. Insbesondere bei Download-Diensten kann es erforderlich sein, dass alle Datenpakete fehlerfrei am Empfänger rekonstruiert werden können.

Bei MBMS-Diensten (MBMS - Multimedia Broadcast/Multicast Service), die bspw. bei 3GPP (3GPP - Third Generation Partnership Project) standardisiert werden, werden Datenpakete von einem Sender an mehrere Empfänger übertragen. Dabei können bei verschiedenen Empfängern unterschiedliche Datenpakete fehlerhaft den jeweiligen Empfänger erreichen.

Um einen fehlerfreien Empfang zu gewährleisten könnten die Datenpakete mehrfach übertragen werden, so dass ein fehlerhafter Empfang sehr unwahrscheinlich ist. Diese Vorgehensweise ist jedoch äußerst ineffizient, da allen Empfängern, unabhängig ob ein fehlerhafter Empfang vorliegt, die Datenpakete wiederholt zugeschickt werden.

Daneben kann zusätzlich zu den Datenpaketen ein Fehlerschutz in Form von Paritätsdaten an den Empfänger übermittelt werden. Damit kann eine maximale Anzahl von fehlerhaften Datenpaketen korrigiert werden, jedoch kann damit ein fehlerfreier Empfang nicht garantiert werden.

Alternativ oder zusätzlich kann ein Empfänger nach fehlerhaftem Empfang eines oder mehrerer Datenpakete eine Punkt-zu-Punkt Verbindung mit dem Sender aufbauen, um die fehlerhaften Datenpakete im Form von Fehlerkorrekturpaketen anzufordern. Hierbei können alle Datenpakete, die fehlerhaft sind dediziert angefordert werden. Je mehr Datenpakete angefragt werden, desto mehr Bandbreite wird für den MBMS-Dienst benötigt. Ferner steigen mit der Anzahl der angeforderten Datenpakete die Übertragungskosten, da mehr Bandbreite benötigt wird.

Im Allgemeinen kann ein Datenpaket, ein Paritätspaket und/oder ein Fehlerkorrekturpaket aus einem oder mehreren Symbolen gebildet werden. Dabei umfasst ein Datenpaket Quellensymbole, ein Paritätspaket Paritätssymbole und ein Fehlerkorrekturpaket Fehlerkorrektursymbole.

Die Veröffentlichung "Iterative Reliability-Based Decoding of Low-Density Partiy Check Codes" von M. P. C. Fossorier, IEEE Journal on seleceted areas in communications, Bd. 19, Nr. 5, Mai 2005, Seiten 908 ff., offenbart ein iteratives zuverlässigkeitsbasiertes Verfahren zum Dekodieren von LDCP-Codes, welches mit einem Belief-Propagation-Verfahren kombiniert wird. In einem ersten Schritt wird ein Zuverlässigkeitswert für jedes Bit eines Codewort basierend auf einer Belief-Propagation-Decodierung ermittelt. Danach wird auf der Grundlage dieser Zuverlässigkeitswerte eine geordnete statistische Decodierung iterativ durchgeführt.

Das Buch "Handbook of Coding Theory (Volume I)" herausgegeben von W.C. Huffman und V.S. Pless , 1998, Elsevier , Bd. I,, Seiten 15-18, 654 und 1215 offenbart, dass blockcodierte Codeworte mehrere Informationsmengen enthalten, die durch Gaußsche Eliminierung erhalten werden.

Der Spezifikationsentwurf "Specification Text for Systematic Raptor Forward Error Correction" 3GPP Draft; AHP205 Raptor Specification, 3rd Generation Partnership Project (3GPP), , Bd. SA WG4, Nr. Sophia Antipolis, Frankreich; 31. März 2005 offenbart Spezifikationen hinsichtlich eines FEC-Decoders.

Die Veröffentlichung "An Efficient Maximum-Likelihood Decoding of LDPC Codes Over the Binary Erasure Channel" von D. Burshtein et al., IEEE Transactions on information theory, IEEE, Bd. 50, Nr. 11, 1. November 2004, Seiten 2837-2844, offenbart ein Maximum-Likelihood-Verfahren zum Decodieren von Paritätsprüfungscodes.

Der Erfindung liegt die Aufgabe zugrunde, ein Verfahren und eine Vorrichtung anzugeben, das/die eine Auswahl mit einer minimalen Anzahl von Fehlerkorrektursymbolen zur fehlerfreien Rekonstruktion von Quellensymbolen erzielt.

Diese Aufgabe wird durch die unabhängigen Ansprüche gelöst. Hierbei ermöglicht das erfindungsgemäße Verfahren eine minimale Anzahl von Fehlerkorrektursymbolen zu ermitteln, die zur fehlerfreien Rekonstruktion der Quellensymbole benötigt werden. Dabei wird die für die Übertragung der Fehlerkorrektursymbole benötige Bandbreite reduziert. Ferner wird durch eine minimale Anzahl von Fehlerkorrektursymbolen eine Reduktion der Übertragungszeit erzielt, da bei realen Übertragungssystemen ist die Übertragungsbandbreite limitiert. Ferner können durch das erfindungsgemäße Verfahren Übertragungskosten eingespart werden, da lediglich eine minimale Anzahl von Fehlerkorrektursymbolen übertragen werden muss.

Sonstige Weiterbildungen der Erfindung sind in den Unteransprüchen wiedergegeben.

Vorzugsweise wird gemäß Anspruch 2 eine Anwendung des erfindungsgemäßen Verfahrens auf eine Verkettung eines systematischen und eines nicht-systematischen Blockcodes erzielt. Dies wird durch Erstellen einer von der systematischen und nicht-systematischen Generatormatrix abgeleiteten Codematrix erreicht, wobei das Ableiten durch einfache Kopieroperationen umgesetzt werden kann.

Ferner wird in einer vorteilhaften Variante des erfindungsgemäßen Verfahrens gemäß Anspruch 3 eine Anwendung für zwei systematische und einen nachgeschalteten nicht-systematischen Blockcode durchgeführt. Dabei kann in besonders einfacher Weise eine Codiermatrix erzeugt werden, wobei das Erzeugen ohne komplexe Matrixoperationen ausgeführt werden kann.

In einer zweckmäßigen Erweiterung des erfindungsgemäßen Verfahrens gemäß Anspruch 4 oder 5 kann das Verfahren auf einen nicht-systematische oder einen systematischen Raptorcode angewandt werden. Dabei können die äußeren Codes und der innere Code auf zwei systematische und einen nicht-systematischen Blockcode überführt werden, wodurch sich eine einfache Ermittlung der Codiermatrix erreichen lässt. Bei Verwendung eines systematischen Raptorcode muss vor Anwendung eines systematischen Blockcodes eine Korrekturmatrix eines nicht-systematischen Blockcodes eingefügt werden, wobei diese Korrekturmatrix bei der Erstellung der Codiermatrix unberücksichtigt bleibt.

Vorzugsweise wird das erfindungsgemäße Verfahren mit einem systematischen oder nicht-systematischen Blockcode gemäß Anspruch 6 oder 7 verwendet. Dabei kann die Codiermatrix in besonders einfacher Weise durch Kopieren der Generatormatrix generiert werden.

In einer alternativen zweckmäßigen Erweiterung des erfindungsgemäßen Verfahrens kann gemäß Anspruch 8 das erfindungsgemäße Verfahren derart gesteuert werden, dass nur systematischen codierte Quellensymbole als Fehlerkorrektursymbole ausgewählt und angefragt werden. Dies hat bei systematischen Blockcodes den Vorteil, dass unter Umständen eine fehlerfreie Rekonstruktion mit dem angeforderten Fehlerschutzsymbol ohne ein aufwendiges Fehlerkorrekturverfahren erzielt werden kann, da es sich bei den Fehlerkorrektursymbolen um systematische codierte Codiersymbole, also Quellensymbole, handelt.

Vorzugsweise werden den Quellensymbolen, codierten Codesymbolen und den Codesymbolen binäre Werte oder Werte eines Galois-Felds zugewiesen. Dadurch ist das erfindungsgemäße Verfahren bei unterschiedlichen Zahlenräumen und somit für eine Vielzahl unterschiedlicher Applikationen einsetzbar.

Die Erfindung betrifft auch eine Vorrichtung zum Durchführen des erfindungsgemäßen Verfahrens und der dazu abhängigen Unteransprüche. Somit kann das erfindungsgemäße Verfahren in einem Gerät, insbesondere einem tragbaren Mobilfunkgerät, implementiert und ausgeführt werden.

Die Erfindung und ihre Weiterbildungen werden nachfolgend anhand von Figuren näher erläutert.

Es zeigen:

Figur 1     ein Ausführungsbeispiel des erfindungsgemäßen Verfahrens mit einer Sende- und Empfangsvorrichtung und einem fehlerbehafteten Übertragungskanals;

Figur 2     ein Ablaufdiagramm des erfindungsgemäßen Verfahrens;

Figur 3     eine erste Variante des erfindungsgemäßen Verfahrens mit einem systematischen und einem nicht-systematischen Blockcode;

Figur 4     eine Generatormatrix gemäß der ersten Variante;

Figur 5     eine zweite Variante des erfindungsgemäßen Verfahrens mit zwei systematischen und einem nicht-systematischen Blockcode;

Figur 6     eine Generatormatrix gemäß der zweiten Variante;

Figur 7     Anwendung einer erfindungsgemäßen Vorrichtung in einem tragbaren Gerät.

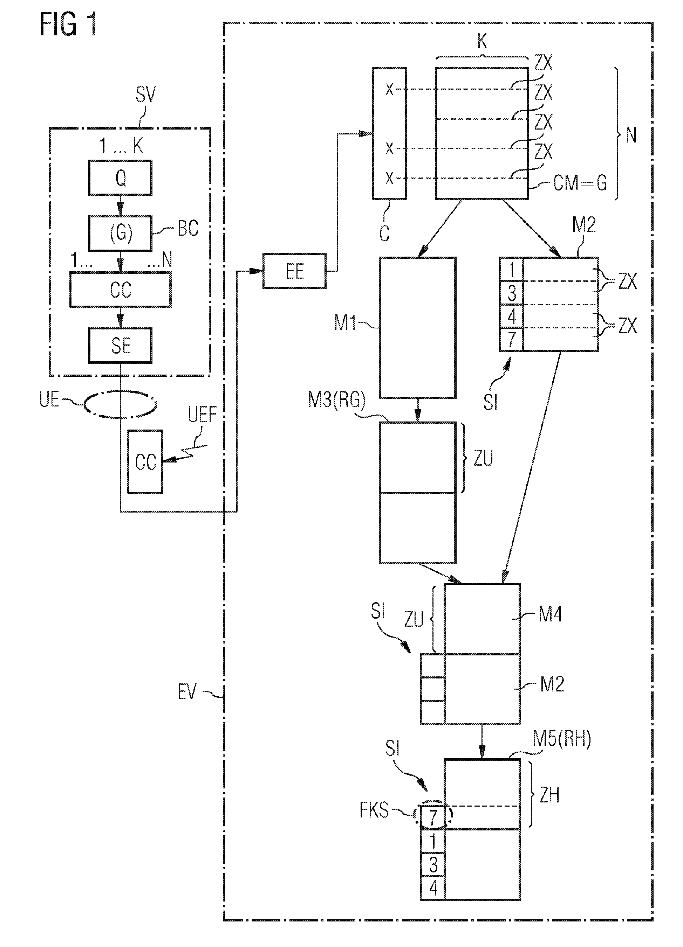

Elemente mit gleicher Funktion und Wirkungsweise sind in den Figuren 1 mit 7 mit denselben Bezugszeichen versehen.

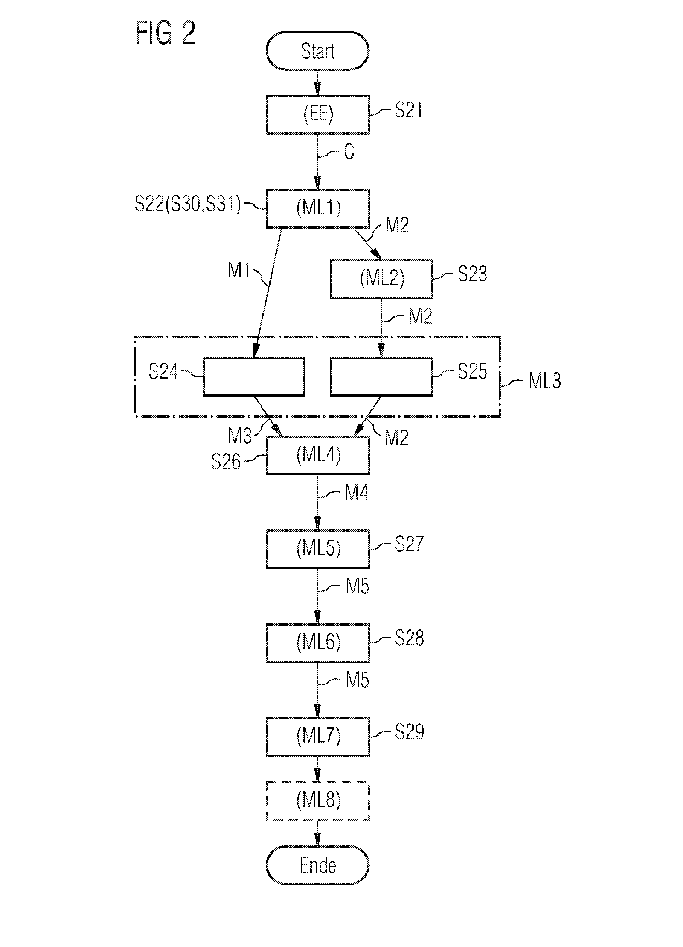

Mit Hilfe der Figuren 1 und 2 wird das erfindungsgemäße Verfahren näher erläutert. In Figur 1 ist eine Sendevorrichtung SV, bspw. eine MBMS-Sendevorrichtung (MBMS - Multimedia Broadcast/Multicast Service), zu sehen. Diese Sendevorrichtung SV codiert mit Hilfe einer Generatormatrix G eines Blockcodes BCN Quellensymbole Q. Diese Quellensymbole Q repräsentieren bspw. eine komprimierte Sprach- oder Bilddatei. So sind die komprimierte Sprachdatei z.B. nach AMR-Standard (AMR - Adaptive Multirate) und die komprimierte Bilddatei nach JPEG-Standard (JPEG - Joint Picture Expert Group) codiert worden. Die Quellensymbole Q können im Allgemeinen beliebige Daten beschreiben, welche komprimiert oder nicht komprimiert sein können. Für die weitere Ausführung wird die Vektor- bzw. Matrixschreibweise benutzt.

Für das folgende Ausführungsbeispiel werden binäre Quellensymbole Q verwendet, wie bspw.

$$Q = \begin{bmatrix} 1 & 1 & 0 & 1 \end{bmatrix}^{T}, \tag{1}$$

wobei eine erste Anzahl K an Quellensymbole K=4 beträgt.

Die Generatormatrix G kann folgendermaßen wiedergegeben werden:

$$G = \begin{bmatrix} 1 & 0 & 0 & 0 \\ 0 & 1 & 0 & 0 \\ 0 & 0 & 1 & 0 \\ 0 & 0 & 0 & 1 \\ 0 & 1 & 1 & 1 \\ 1 & 0 & 1 & 1 \\ 1 & 1 & 0 & 1 \end{bmatrix} \Big\} N \qquad (2)$$

Durch diese Generatormatrix G werden aus K=4 Quellensymbole Q N=7 codierte Codesymbole CC gebildet. Da diese Generatormatrix G einen systematischen Blockcode BC beschreibt sind K=4 codierte Codesymbole CC identisch mit den K=4 Quellensymbolen Q und die restlichen N-K=3 codierten Codesymbole CC entsprechen Paritätssymbolen P. Das Bezugszeichen N wird als zweite Anzahl N bezeichnet. Die codierten Codesymbole CC berechnen sich zu:

$$CC = G \times Q = [1,1,0,1,0,0,1]^T \qquad (3)$$

Bei der Übertragung der codierten Codesymbole CC von einer Sendeeinheit SE der Sendevorrichtung SV über einen Übertragungskanal UE zu einer Empfangseinheit EE einer Empfangsvorrichtung EV treten Übertragungsfehler UEF auf. Die Empfangsvorrichtung EV kann als MBMS-Empfangsstation ausgebildet sein. Insbesondere bei Übertragung über drahtlose Übertragungskänale UE, z.B. über einen nach GSM-Standard (GSM - Global System for Mobile Communications) oder UMTS-Standard (UMTS - Universal Mobile Telecommunications System) arbeitenden Mobilfunkkanal, treten Übertragungsfehler UEF zu Tage. Ferner können auch bei drahtgebundenen Übertragungswegen Fehler auftreten, wie z.B. bei IP über LAN (IP - Internet Protocol, LAN - Local Area Betwork). Dabei können codierte Codesymbole CC verfälscht empfangen werden, oder codierte Codesymbole CC werden bei der Übertragung ausgelöscht und erreichen die Empfangseinheit EE nicht. Bei der vorliegenden Erfindung erreichen codierte Codesymbole CC die Empfangsvorrichtung EV als fehlerhaft empfangene Codesymbole C. In Figur 1 sind empfangene Codesymbole C, die z.B. aufgrund einer Verfälschung oder Auslöschung fehlerhaft sind, mit einem Bezugszeichen 'X' markiert. In Figur 2 ist der Empfang der Codesymbole C im Schritt 21 wiedergegeben.

Im vorliegenden Ausführungsbeispiel zeigen die empfangenen Codesymbole C folgendes Aussehen:

$$C = [X,1,X,X,0,0,X]^T \qquad (4)$$

Somit sind die Codesymbole C mit einem Index 2, 5, 6 empfangen bzw. mit dem Index 1, 3, 4, 7 nicht empfangen worden. Der Index gibt eine Position des Codesymbols innerhalb des durch alle Codesymbole aufgespannten Zeilenvektors an, z.B. ist der Index 2 das zweite Codesymbol mit einem Wert '1' und der Index sieben zeigt auf das letzte Codesymbol mit einem Wert 'X'. In diesem Ausführungsbeispiel werden binäre Symbole mit den Zeichen '0' und '1' für die Quellensymbole Q, codierten Codesymbole CC, Codiersymbole C und die Koeffizienten der Matrizen benutzt.

In einem weiteren Verarbeitungsschritt S22 werden eine erste und eine zweite Matrix M1, M2 aus einer Codiermatrix CM gebildet. Die Codiermatrix CM ist bei einem systematischen und/oder nicht systematischen Blockcode BC die dazugehörigen Generatormatrix G. Unter dem Begriff nicht-systematischer Blockcode können im Rahmen dieser Erfindung auch systematische Blockcodes verstanden werden. Als Blockcode werden bspw. ein LDGM-Code oder ein LPDC-Code (LDGM - Low Density Generator Matrix, LDPC - Low Density Parity Code) benutzt. Die Codiermatrix CM für Nacheinander ausgeführte Blockcodes wird in einer Ausführungsvariante erläutert. Da es sich bei diesem Ausführungsbeispiel um einen systematischen Blockcode BC handelt ist die Codiermatrix CM

$$CM = \begin{bmatrix} 1 & 0 & 0 & 0 \\ 0 & 1 & 0 & 0 \\ 0 & 0 & 1 & 0 \\ 0 & 0 & 0 & 1 \\ 0 & 1 & 1 & 1 \\ 1 & 0 & 1 & 1 \\ 1 & 1 & 0 & 1 \end{bmatrix} \Big\} N \qquad (5)$$

Die erste Matrix M1 wird aus der Codiermatrix CM durch zeilenweises Kopieren der i-ten Zeile für fehlerfrei empfangene i-te Codiersymbole C erzeugt. Die übrigen nicht kopierten Zeilen, d.h. jede i-te Zeile ZX eines fehlerhaft empfangenen i-ten Codiersymbols C, werden in die zweite Matrix M2 eingefügt. Somit werden Zeilen ZX mit einer Zeilennummer 1, 3, 4, und 7 der Codiermatrix CM in die zweite Matrix M2 kopiert, d.h. die Codesymbole C mit dem Index 1, 3, 4 und 7 fehlerhaft empfangen worden sind. Zeilen mit einer Zeilennummer 2, 5 mund 6 werden in die erste Matrix M1 übertragen, da die empfangenen Codiersymbole C mit dem Index 2, 5 und 6 fehlerfrei sind. Somit ergibt sich die erste Matrix M1 zu

$$M1 = \begin{bmatrix} 0 & 1 & 0 & 0 \\ 0 & 1 & 1 & 1 \\ 1 & 0 & 1 & 1 \end{bmatrix}. \qquad (6)$$

Die zweite Matrix M2 umfasst die übrigen Zeilen der Codiermatrix, die nicht in der ersten Matrix M1 enthalten sind. Die zweite Matrix M2 lautet:

$$M2 = \begin{bmatrix} 1 & 0 & 0 & 0 \\ 0 & 0 & 1 & 0 \\ 0 & 0 & 0 & 1 \\ 1 & 1 & 0 & 1 \end{bmatrix} \qquad (7)$$

Die Zeilen der zweiten Matrix M2 werden im Schritt S23 mit einem jeweiligen Zeilenindex SI markiert, wobei der jeweilige Zeilenindex SI der Zeilennummer der Generatormatrix GN entspricht. Zur Unterscheidung zwischen Koeffizient und Zeilenindex SI wird der jeweilige Zeilenindex SI in Anführungszeichen gesetzt. Die markierte zweite Matrix M2 lautet somit:

$$M2 = \begin{bmatrix} 1 & 0 & 0 & 0 \\ 0 & 0 & 1 & 0 \\ 0 & 0 & 0 & 1 \\ 1 & 1 & 0 & 1 \end{bmatrix} \begin{matrix} '1' \\ '3' \\ '4' \\ '7' \end{matrix} \qquad (8)$$

In der zweiten Matrix M2 sind natürliche Zahlen zur Beschreibung der Zeilenindizes verwendet worden. Im Allgemeinen sind als Zeilenindex Markierungen zu verwenden, die eine eindeutige Identifikation der markierten Zeile erlauben. Neben natürlichen Zahlen können auch Buchstaben oder Speicheradressen benutzt werden.

In einem weiteren Schritt S24 wird die erste Matrix M1 durch elementare Zeilenumformung und/oder Spaltentausch in die dritte Matrix M3 transformiert, wobei als Ergebnis RG unabhängige Zeilen ZU entstehen, wobei RG einem Rang der ersten bzw. dritten Matrix M1, M3 entspricht. Unter elementarer Zeilenumformung sind gemäß [1] Seite 61 folgende Operationen bekannt:

(I) Addition eines Vielfaches einer Zeile zu einer anderen Zeile
(II) Vertauschen zweier Zeilen
(III) Multiplikation einer Zeile mit einem Skalar $\lambda \neq 0$

Zur Ermittlung der dritten Matrix M3 wird zunächst die Matrix M1 kopiert und dann werden folgende Arbeitsschritte durchgeführt, wobei im Folgenden für jeden Arbeitsschritt das Zwischenergebnis der dritten Matrix angegeben ist:

a) Vertauschen der ersten und zweiten Spalte:

$$M3 = \begin{bmatrix} 1 & 0 & 0 & 0 \\ 1 & 0 & 1 & 1 \\ 0 & 1 & 1 & 1 \end{bmatrix} \tag{9}$$

b) Addition der ersten Zeile zur zweiten Zeile:

$$M3 = \begin{bmatrix} 1 & 0 & 0 & 0 \\ 0 & 0 & 1 & 1 \\ 0 & 1 & 1 & 1 \end{bmatrix} \tag{10}$$

c) Vertauschen der zweiten und dritten Zeile:

$$M3 = \begin{bmatrix} 1 & 0 & 0 & 0 \\ 0 & 1 & 1 & 1 \\ 0 & 0 & 1 & 1 \end{bmatrix} \tag{11}$$

Hierbei ist der Rang RG=3 und somit sind in der dritten Matrix M3 RG Zeilen ZU unabhängig. In diesen Arbeitsschritten a) bis c) sind Addition und Subtraktionen gleichwertig, da die einzelnen Symbole binäre Symbole sind. Ferner kann die Matrix M3 durch Addition der dritten zur zweiten Zeile weiter vereinfacht werden. Die dritte Matrix M3 lautet somit:

$$M3 = \begin{bmatrix} 1 & 0 & 0 & 0 \\ 0 & 1 & 0 & 0 \\ 0 & 0 & 1 & 1 \end{bmatrix} \tag{12}$$

In einem weiteren Schritt S25 wird ein identischer Zeilentausch der Spalten der zweiten Matrix M2 wie bei der Transformation der ersten in die dritte Matrix M1, M3 durchgeführt. Im Arbeitsschritt a) sind die Spalten eins und zwei vertauscht worden. Gemäß diesem Arbeitsschritt wird in der zweiten Matrix M2 ebenso die erste und zweite Spalte getauscht. Somit ergibt sich die zweite Matrix M2 unter Angabe der Zeilenindizes SI zu

$$M2 = \begin{bmatrix} 0 & 1 & 0 & 0 \\ 0 & 0 & 1 & 0 \\ 0 & 0 & 0 & 1 \\ 1 & 1 & 0 & 1 \end{bmatrix} \begin{matrix} '1' \\ '3' \\ '4' \\ '7' \end{matrix} \tag{13}$$

In einem weiteren Schritt S26 des Ausführungsbeispiels werden die RG unabhängigen Zeilen ZU der dritten Matrix M3 und die Zeilen der zweiten Matrix M2 in einer vierten Matrix M4 zusammengefasst. Die Reihenfolge, in der die Zeilen der zweiten und dritten Matrix M2, M3 in die vierte Matrix M4 eingefügt werden, ist beliebig, bspw. werden zuerst alle unabhängigen Zeilen ZU der dritten Matrix M3 und danach die Zeilen der zweiten Matrix M2 in die vierte Matrix M4 kopiert. Die vierte Matrix M4 lautet somit:

$$M4 = \begin{bmatrix} 1 & 0 & 0 & 0 \\ 0 & 1 & 0 & 0 \\ 0 & 0 & 1 & 1 \\ 0 & 1 & 0 & 0 & \text{'1'} \\ 0 & 0 & 1 & 0 & \text{'3'} \\ 0 & 0 & 0 & 1 & \text{'4'} \\ 1 & 1 & 0 & 1 & \text{'7'} \end{bmatrix} \qquad (14)$$

In der vierten Matrix M4 sind zusätzlich Zeilenindizes für die Zeilen der zweiten Matrix M2 aufgetragen. Ferner wird die vierte Matrix M4 durch elementare Zeilenumformungen und/oder Spaltentausch in eine fünfte Matrix M5 transformiert, wobei RH unabhängige Zeilen als Transformationsergebnis erzielt werden. RH entspricht dabei dem Rang RH der vierten bzw. fünften Matrix M4, M5. Dabei ist zu beachten, dass nur Zeilen der vierten Matrix M4 eliminiert werden dürfen, die einen Zeilenindex ZI tragen, d.h. die Zeilen der zweiten Matrix.

Zur Ermittlung der fünften Matrix M5 wird im Schritt S27 zunächst die vierte Matrix M4 kopiert und dann werden folgende Arbeitsschritte durchgeführt, wobei im Folgenden für jeden Arbeitsschritt das Zwischenergebnis der fünften Matrix M5 angegeben ist:

a) Addition der ersten und zweiten Zeile zur siebten Zeile:

$$M5 = \begin{bmatrix} 1 & 0 & 0 & 0 \\ 0 & 1 & 0 & 0 \\ 0 & 0 & 1 & 1 \\ 0 & 1 & 0 & 0 & \text{'1'} \\ 0 & 0 & 1 & 0 & \text{'3'} \\ 0 & 0 & 0 & 1 & \text{'4'} \\ 0 & 0 & 0 & 1 & \text{'7'} \end{bmatrix} \qquad (15)$$

b) Zeilentausch der vierten und siebten Zeile:

$$M5 = \begin{bmatrix} 1 & 0 & 0 & 0 \\ 0 & 1 & 0 & 0 \\ 0 & 0 & 1 & 1 \\ 0 & 0 & 0 & 1 & \text{'7'} \\ 0 & 0 & 1 & 0 & \text{'3'} \\ 0 & 0 & 0 & 1 & \text{'4'} \\ 0 & 1 & 0 & 0 & \text{'1'} \end{bmatrix} \left.\begin{matrix} \\ \\ \\ \\ \end{matrix}\right\} ZH \qquad (16)$$

Somit beträgt ein Rang RH der fünften Matrix M5 RH=4, wobei eine Anzahl von RH=4 unabhängigen Zeilen ZH in der fünften Matrix M5 enthalten sind. Die unabhängigen Zeilen ZH sind die ersten vier Zeilen der fünften Matrix M5. Die Zeilen fünf bis sieben der fünften Matrix können zu Null gesetzt werden, wobei dies am Ergebnis keine Änderungen bewirkt. Die zusätzlichen Arbeitsschritte zeigen dies :

c) Addition der zweien Zeile zur siebten Zeile :

$$M5 = \begin{bmatrix} 1 & 0 & 0 & 0 \\ 0 & 1 & 0 & 0 \\ 0 & 0 & 1 & 1 \\ 0 & 0 & 0 & 1 \\ 0 & 0 & 1 & 0 \\ 0 & 0 & 0 & 1 \\ 0 & 0 & 0 & 0 \end{bmatrix} \begin{array}{l} \\ \\ \\ '7' \\ '3' \\ '4' \\ '1' \end{array} \qquad (17)$$

d) Addition der vierten Zeile zur sechsten Zeile:

$$M5 = \begin{bmatrix} 1 & 0 & 0 & 0 \\ 0 & 1 & 0 & 0 \\ 0 & 0 & 1 & 1 \\ 0 & 0 & 0 & 1 \\ 0 & 0 & 1 & 0 \\ 0 & 0 & 0 & 0 \\ 0 & 0 & 0 & 0 \end{bmatrix} \begin{array}{l} \\ \\ \\ '7' \\ '3' \\ '4' \\ '1' \end{array} \qquad (18)$$

e) Addition der dritten und vierten Zeile zur fünften Zeile:

$$M5 = \begin{bmatrix} 1 & 0 & 0 & 0 \\ 0 & 1 & 0 & 0 \\ 0 & 0 & 1 & 1 \\ 0 & 0 & 0 & 1 \\ 0 & 0 & 0 & 0 \\ 0 & 0 & 0 & 0 \\ 0 & 0 & 0 & 0 \end{bmatrix} \begin{array}{l} \\ \\ \\ '7' \\ '3' \\ '4' \\ '1' \end{array} \qquad (19)$$

In einem nächsten Schritt S28 des erfindungsgemäßen Verfahrens werden nun diejenigen Zeilen in der fünften Matrix M5 detektiert, die einen Zeilenindex ZI innerhalb der unabhängigen Zeilen ZH aufweisen. Wie aus Gleichung 16 bzw. 19 ersichtlich ist die vierte Zeile der fünften Matrix M5 Teil der unabhängigen Zeilen ZH und ist durch den Zeilenindex '7' markiert.

Somit wird im Schritt S29 als Fehlerkorrektursymbol FKS das codierte Codesymbol CC mit dem Index 7 durch die Empfangsvorrichtung EV bei der Sendevorrichtung SV angefordert. Damit ist das zu übertragende Fehlerkorrektursymbol FKS eindeutig durch den Zeilenindex ZI identifiziert. Im vorliegenden Ausführungsbeispiel wird nur ein Fehlerkorrektursymbol FKS angefordert. Im Allgemeinen können auch mehrere, je nach Anzahl der mit Zeilennummern ZI markieren Zeilen ZU, angefragt werden. Nachdem das Fehlerkorrektursymbol FKS, wie bspw. das codierte Codesymbol CC mit dem Index 7, an der Empfangsvorrichtung EV fehlerfrei vorliegt, kann eine vollständige Rekonstruktion der Quellensymbole Q durchgeführt werden. Dazu kann das fehlerhafte Codesymbol C durch das fehlerfrei empfangene Fehlerkorrektursymbol FKS ersetzt werden. Auf eine Darstellung der Rekonstruktion wird an dieser Stelle verzichtet, da die Rekonstruktion von Quellensymbolen aus Codesymbolen mittels eines Blockcodes bekannt ist.

Wird nur ein Teil der Fehlerkorrektursymbole FKS fehlerfrei empfangen, so kann das erfindungsgemäße Verfahren auf die empfangenen Codesymbole und die empfangenen Fehlerkorrektursymbole angewandt werden, wobei als Ergebnis diejenigen zusätzlichen Fehlerkorrektursymbole gewonnen werden, die zur vollständigen Rekonstruktion der Quellensymbole zusätzlich benötigt werden.

In einer Variante des erfindungsgemäßen Verfahrens werden beim Erstellen der zweiten Matrix M2 nur diejenigen Zeilen ZX berücksichtigt, die systematischen codierten Codesymbolen zuordenbar sind. Dies bedeutet für Schritt S22 gemäß Figur 2, dass die zweite Matrix M2 lediglich eine oder mehrere der Zeilen eins bis vier der Codiermatrix CM umfassen kann. Bei Verwendung dieser Variante zeigt die zweite Matrix M2 folgendes Aussehen auf, da nur die erste, dritte und vierte Zeile der Codiermatrix CM in Betracht gezogen werden:

$$M2 = \begin{bmatrix} 1 & 0 & 0 & 0 \\ 0 & 0 & 1 & 0 \\ 0 & 0 & 0 & 1 \end{bmatrix} \begin{matrix} '1' \\ '3' \\ '4' \end{matrix} \qquad (20)$$

Das weitere Vorgehen zum Ermitteln der Fehlerkorrektursymbole FKS ist analog zu den Schritten S23 bis S29 des obigen Ausführungsbeispiels. Nach Bildung der vierten Matrix M4 und Transformation der vierten Matrix M4 ergibt sich bspw. folgendes Ergebnis:

$$M4 = \begin{bmatrix} 1 & 0 & 0 & 0 \\ 0 & 1 & 1 & 1 \\ 0 & 0 & 1 & 1 \\ 0 & 0 & 0 & 1 \\ 0 & 0 & 0 & 0 \\ 0 & 0 & 0 & 0 \end{bmatrix} \left.\begin{matrix} \\ \\ \\ '3' \end{matrix}\right\} ZH \quad \begin{matrix} '1' \\ '4' \end{matrix} \qquad (21)$$

Somit wird als Fehlerkorrektursymbol FKS das codierte Symbol CC mit dem Index '3' angefordert.

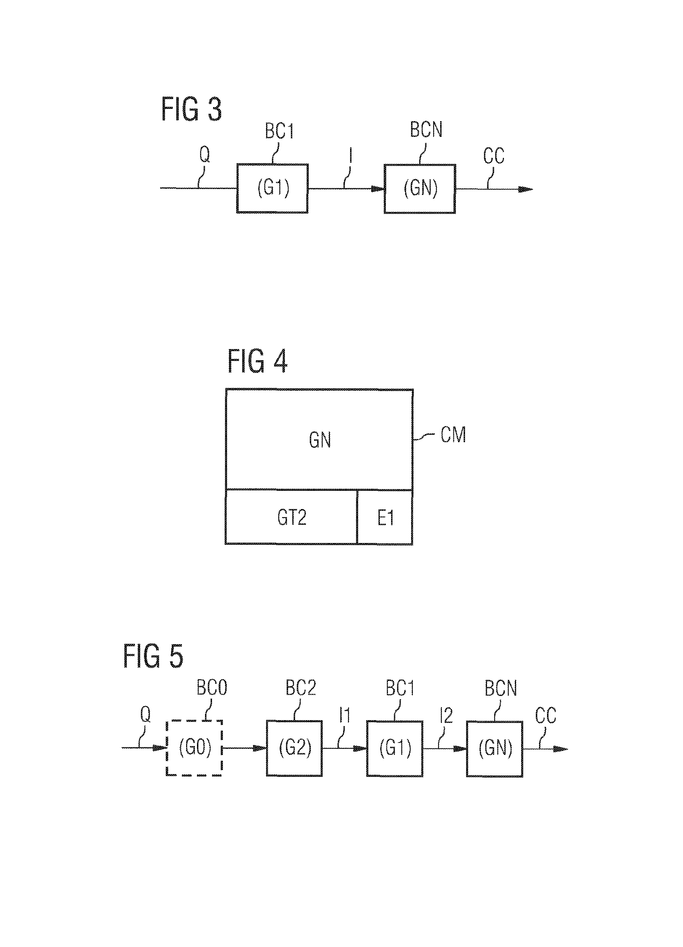

Neben der Verwendung eines einzigen, systematischen oder nicht-systematischen, Blockcodes kann das erfindungsgemäße Verfahren auch bei Anwendung mehrerer, hintereinander geschalteter Blockscodes eingesetzt werden. Im folgenden Ausführungsbeispiel gemäß Figur 3 werden die Quellensymbole Q zuerst mit einer ersten Generatormatrix G1 eines systematischen Blockcode BC1 und die hieraus codierten Symbole I mit einer nicht-systematischen Generatormatrix GN eines nicht-systematischen Blockcodes BCN codiert. Am Ausgang des nicht-systematischen Blockcodes BCN stehen die codierten Codesymbole CC zur Verfügung.

In Figur 4 ist ein Aufbau der Codiermatrix CM zu sehen, wobei zu beachten ist, dass gemäß dieser Erweiterung des erfindungsgemäßen Verfahrens die Codiermatrix CM zur Ermittlung der Fehlerkorrektursymbole FKS und nicht zur Generierung der codierten Codesymbole CC verwendet wird. Die Codiermatrix CM wird nach folgenden Schritten erzeugt:

a) Die nicht-systematische Generatormatrix GN wird zeilenweise in die Codiermatrix CM kopiert. Nach diesem Schritt zeigt die Codiermatrix CM folgendes Aussehen:

$$CM = GN \qquad (22)$$

b) Die erste Generatormatrix G1 wird in einen ersten Generatorteil GT1, der die systematischen Symbole erzeugt, und in einen zweiten Generatorteil GT2, der die Paritätssymbole P, d.h. die nicht-systematischen Symbole, erstellt, aufgeteilt. Ist die erste Generatormatrix G1 bspw. folgendermaßen aufgebaut,

$$G1 = \begin{bmatrix} 1 & 0 & 0 & 0 \\ 0 & 1 & 0 & 0 \\ 0 & 0 & 1 & 0 \\ 0 & 0 & 0 & 1 \\ 0 & 1 & 1 & 1 \\ 1 & 0 & 1 & 1 \\ 1 & 1 & 0 & 1 \end{bmatrix} \qquad (23)$$

so ergeben sich der erste und zweite Generatorteil GT1, GT2 zu

$$GT1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix} \text{ und} \qquad (24)$$

$$GT2 = \begin{bmatrix} 0 & 1 & 1 & 1 \\ 1 & 0 & 1 & 1 \\ 1 & 1 & 0 & 1 \end{bmatrix}, \qquad (25)$$

wobei der erste Generatorteil GT1 einer Einheitsmatrix entspricht.

c) Die Koeffizienten des zweiten Generatorteils GT2 werden in die Codiermatrix CM kopiert. Nach diesem Verarbeitungsschritt ergibt sich die Codiermatrix CM zu:

$$CM = \begin{bmatrix} & & GN & \\ 0 & 1 & 1 & 1 \\ 1 & 0 & 1 & 1 \\ 1 & 1 & 0 & 1 \end{bmatrix} \qquad (26)$$

d) An den zweiten Generatorteil GT2 wird rechts in der Codiermatrix CM eine Einheitsmatrix E1 anhängt, wobei ein Rang der Einheitsmatrix E1 einer Zeilenanzahl des zweiten Generatorteils GT2 entspricht. Damit sieht die Codiermatrix CM wie folgt aus:

$$CM = \begin{bmatrix} & & GN & & & \\ 0 & 1 & 1 & 1 & 1 & 0 & 0 \\ 1 & 0 & 1 & 1 & 0 & 1 & 0 \\ 1 & 1 & 0 & 1 & 0 & 0 & 1 \end{bmatrix} = \begin{bmatrix} GN \\ GT2 \quad E1 \end{bmatrix} \qquad (27)$$

Die Schritte a) bis d) dieser Variante werden als Schritt S30 bezeichnet und können im Schritt S22 gemäß Figur 2 zusätzlich ausgeführt werden. Danach Durchführung des Schritts S30 werden durch Schritt S22 die erste und zweite Matrix M1, M2 erzeugt. Hierbei ist zu beachten, dass in die erste Matrix M1 zusätzlich diejenigen Zeilen der Codiermatrix CM kopiert werden, die den zweiten Generatorteil GT2 und die Einheitsmatrix E1 umfassen. Die weiteren Verarbeitungsschritte S23 bis S29 gemäß Figur 2 werden dann zur Ermittlung der Fehlerkorrektursymbole FKS durchgeführt.

In einer weiteren Variante ist das erfindungsgemäße Verfahren bei Verwendung mehrerer systematischer Blockcodes BC1, BC2 und einem diesen nachfolgenden nicht-systematischen Blockcode BCN verwendbar. In Figur 4 werden aus den Quellensymbolen Q mit Hilfe einer zweiten Generatormatrix G2 des zweiten systematischen Blockcodes BC2 erste Zwischensymbole I1, und aus den ersten Zwischensymbolen I1 mit Hilfe einer zweiten Generatormatrix G2 des zweiten systematischen Blockcodes BCs zweite Zwischensymbole I2 erzeugt. Die zweiten Zwischensymbole I2 werden unter Verwendung einer nicht-systematischen Generatormatrix GN eines nicht-systematischen Blockcodes BCN verarbeitet, so dass codierte Codesymbole CC generiert werden.

Für die Generierung der Codiermatrix CM werden in einem Schritt S31 gemäß Figur 2 folgende Verarbeitungsschritte durchgeführt:

a) Für den systematischen Blockcode BC1, welcher dem nicht-systematischen Blockcode BCN direkt vorausgeht, und den nicht-systematischen Blockcode BCN wird die Codiermatrix CM nach Schritt S30 gemäß Figur 2 ausgeführt. Die hierbei generierte Codiermatrix CM lautet:

$$CM = \begin{bmatrix} GN \\ GT2(G1) & E1 \end{bmatrix} \qquad (28)$$

Hierbei entspricht ein zweiter Generatorteil GT2(G1) demjenigen Bereich der ersten Generatormatrix G1, der die Paritätssymbole, d.h. die nicht-systematischen Symbole, der zweiten Zwischensymbole I2 erzeugt. Der Rang einer ersten Einheitsmatrix E1 ist identisch zur Zeilenanzahl des zweiten Generatorteil GT2(G1) der ersten Generatormatrix G1.

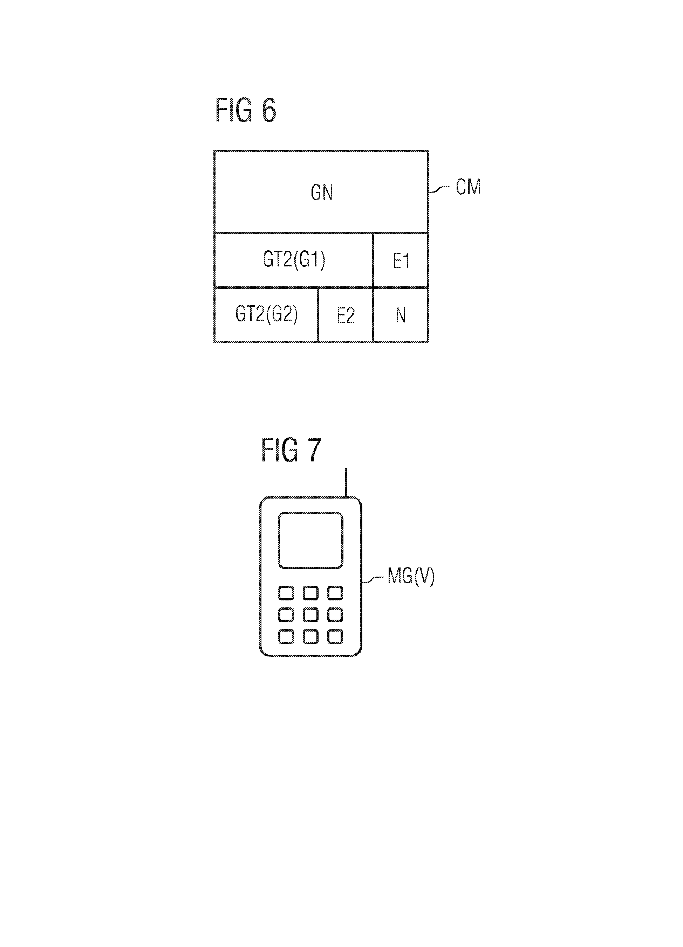

b) Der dem ersten systematischen Blockcode BC1 vorausgehende zweite systematische Blockcode BC2 wird gemäß Figur 6 in folgenden Teilschritten in die Codiermatrix CM einfügt:

- aus der zweiten Generatormatrix G2 wird derjenige zweite Generatorteil GT2(G1) extrahiert, der die Paritätssymbole, d.h. die nicht-systematischen Symbole, der ersten Zwischensymbole I1 erzeugt;

- dieser extrahierte zweite Generatorteil GT2(G2) wird zeilenweise an das Ende der Codiermatrix CM kopiert;

- rechts des kopierten, zweiten Generatorteils GT2(G2) der zweiten Generatormatrix G2 wird eine zweite Einheitsmatrix E2 eingefügt, wobei der Rang dieser zweiten Einheitsmatrix E2 einer Zeilenanzahl des kopierten zweiten Generatorteils GT2(G2) der zweiten Generatormatrix G2 entspricht;

- rechts der eingefügten zweiten Einheitsmatrix M2 werden die, aufgrund einer Zeilenlänge der nicht-systematischen Generatormatrix GN, unbelegten Koeffizienten mit Null belegt. Dies ist in Figur 5 mit einem Bezugszeichen N markiert.

Somit ergibt sich gemäß dieser Erweiterung des erfindungsgemäßen Verfahrens die Codiermatrix CM zu:

$$CM = \begin{bmatrix} GN \\ GT2(G1) & E1 \\ GT2(G2) & E2 & N \end{bmatrix} \qquad (29)$$

Diese zusätzlichen Schritte sind in Figur 2 mit dem Verarbeitungsschritt S31 gekennzeichnet und werden vor Schritt S22 ausgeführt. Im Folgenden werden die erste und zweite Matrix M1, M2 gemäß Schritt S22 erzeugt. Dabei ist zu beachten, dass in die erste Matrix M1 zusätzlich alle Zeilen der Codiermatrix CM eingefügt werden, die den zweiten Generatorteil G2(G1) der ersten Generatormatrix G1 und den zweiten Generatorteil G2(G1) der zweiten Generatormatrix G2 umfassen. Die weiteren Verarbeitungsschritte S23 bis S29 gemäß Figur 2 werden dann zur Ermittlung der Fehlerkorrektursymbole FKS durchgeführt.

EP 1 720 275 B1

Das erfindungsgemäße Verfahren ist geeignet um bei einem systematischen oder nicht-systematischen Raptor-Code eine minimale Anzahl von anzufordernden Fehlerkorrektursymbolen FKS zu ermitteln. Dabei entspricht, wie in Figur 6 wiedergegeben, der nicht-systematische Blockcode BC2 dem inneren Code des Raptor-Codes und der erste und zweite Blockcode BC1, BC2 den jeweiligen äußeren Codes des Raptor-Codes. Der innere Code ist auch als LT-Code (LT - Luby Transform) bekannt. Zusätzlich kann bei nicht-systematischen Raptor-Codes eine Korrekturmatrix G0 eines nicht-systematischen Blockcodes BC0 vor den zweiten systematischen Blockcode BC2 zum Erstellen von systematischen codierten Symbolen CC eingefügt werden. Dadurch entsteht ein systematischer Raptor-Code und es können systematisch codierte Codesymbole CC als Fehlerkorrektursymbole angefordert werden.

Das erfindungsgemäße Verfahren ist anhand von binären Symbolen beschrieben worden. Im Allgemeinen kann das erfindungsgemäße Verfahren mit binären Werten oder Werten eines Galois-Felds GF, wie z.B. im Galois-Feld $(2^8)$, benutzt werden.

Das erfindungsgemäße Verfahren ist unter Verwendung mehrerer Matrizen beschrieben worden. Im Allgemeinen kann das erfindungsgemäße Verfahren mit einer geringen Anzahl an Matrizen und mit zumindest einer anderen Reihenfolge der Schritte S22 bis S29 ausgeführt werden.

Das erfindungsgemäße Verfahren ist mit einer Vorrichtung V durchführbar, wobei die Empfangseinheit EE den Schritt S21, ein erstes Mittel ML1 den Schritt S22 und optional die Schritte S30 und S31, ein zweites Mittel ML2 den Schritt S23, ein viertes Mittel ML4 den Schritt S25, ein drittes Mittel ML3 die Schritte S24 und S25, ein viertes Mittel ML4 den Schritt S26, ein fünftes Mittel ML5 den Schritt 27, ein sechstes Mittel ML6 den Schritt S28 und ein siebtes Mittel ML7 den Schritt 29 implementiert und ausführt. Ferner kann die Vorrichtung noch über ein achtes Mittel ML8 verfügen, mit dem Erweiterungen des Erfindungsgemäßen Verfahrens realisierbar sind.

Das erfindungsgemäße Verfahren wird in einem Endgerät EG mit Hilfe der Vorrichtung V durchgeführt. In Figur 7 ist ein derartiges Endgerät EG in Form eines tragbaren Geräts abgebildet. Dieses tragbare Gerät arbeitet bspw. nach einem Mobilfunkstandard, insbesondere nach GSM-Standard (GSM-Global System für Mobile Communications), UMTS-Standard (UMTS-Universal Mobile Telecommunications System), DAB-Standard (DAB-Digital Audio Broadcast) oder DVB-Standard (DVB-Digital Video Broadcast).

Literaturverzeichnis

[1] Prof. C. Preston, "Ein Skript für Lineare Algebra I und II", 2003/04, http://dhcp24-159.mathematik.uni-bielefeld.de/~preston/files/teaching/linalg/skripten/ linalg.pdf

## Patentansprüche

1. Verfahren zum Übertragen von Fehlerkorrektursymbolen (FKS), wobei codierte Codesymbole (CC) unter Verwendung einer Generatormatrix (G) eines Blockcodes (BC) generiert und die codierten Codesymbole (CC) von einer Sendevorrichtung (SV) zu einer Empfangsvorrichtung (EV) übertragen werden, wobei Übertragungsfehler (UEF) in den empfangenen Codesymbolen (C) auftreten, wobei die zu übertragenden Fehlerkorrektursymbole (FKS) nach folgenden Schritten erzeugt werden:

   - eine erste und zweite Matrix (M1, M2) werden zeilenweise aus einer von der Generatormatrix (G) abgeleiteten Codiermatrix (CM) derart gebildet, dass die i-te Zeile der Codiermatrix (CM) entweder in die erste Matrix (M1) für ein fehlerfrei empfangenes i-tes Codiersymbol (C) oder in die zweite Matrix (M2) für ein fehlerhaft empfangenes i-tes Codiersymbol (C) kopiert wird,
   - jede Zeile der zweiten Matrix (M2) wird mit einem Zeilenindex (SI) entsprechend einer Zeilennummer der Codiermatrix (CM) markiert,
   - die erste Matrix (M1) wird durch elementare Zeilenumformungen und/oder Spaltentausch in eine dritte Matrix (M3) mit RG unabhängigen Zeilen (ZU) transformiert, wobei RG einem Rang (RG) der ersten Matrix (M1) entspricht, und wobei bei Spaltentausch zusätzlich ein identischer Spaltentausch in der zweiten Matrix (M2) ausgeführt wird,
   - eine vierte Matrix (M4) wird durch Kopieren der Elemente der RG unabhängigen Zeilen (ZU) der dritten Matrix (M3) und durch Anfügen der Zeilen der zweiten Matrix (M2) mit den Zeilenindizes (ZI) nach den unabhängigen Zeilen (ZU) erstellt,
   - die vierte Matrix (M4) wird durch elementare Zeilenumformungen und/oder Spaltentausch in eine fünfte Matrix (M5) derart transformiert, dass RH unabhängige Zeilen (ZH) entstehen, wobei RH einem Rang (RH) der vierten Matrix entspricht, und wobei bei Zeilentausch auch die jeweiligen Zeilenindizes (ZI) getauscht und nur Zeilen

13

mit Zeilenindizes eliminiert werden,
- in den RH unabhängigen Zeilen (ZH) der fünften Matrix (M5) werden diejenigen Zeilen detektiert, die aufgrund der zweiten Matrix (M2) einen Zeilenindex (ZI) aufweisen,
- durch jeden detektierten Zeilenindex (ZI) wird jeweils ein codiertes Codesymbol (CC) eindeutig identifiziert, das in Form eines Fehlerkorrektursymbols (FKS) durch die Empfangsvorrichtung (EV) zur fehlerfreien Rekonstruktion der Quellensymbole (Q) angefordert und von der Sendevorrichtung (SV) übertragen wird.

2. Verfahren nach Anspruch 1,
   **dadurch gekennzeichnet, dass**
   die Quellensymbole (Q) zuerst mit einer ersten Generatormatrix (G1) eines ersten systematischen Blockcode (BC1) und die hieraus codierten Symbole (I) mit einer nicht-systematischen Generatormatrix (GN) eines nicht-systematischen Blockcodes (BCN) codiert werden, wobei die Codiermatrix (CM) durch folgende Schritte erzeugt wird:

   a) Die nicht-systematische Generatormatrix (GN) wird zeilenweise in die Codiermatrix (CM) kopiert;
   b) Die erste Generatormatrix (G1) wird aufgeteilt in einen ersten Generatorteil (GT1), der die Quellensymbole (Q) erzeugt, und in einen zweiten Generatorteil (GT2), der die Paritätssymbole (P) erstellt;
   c) Die Koeffizienten des zweiten Generatorteils (GT2) werden zeilenweise unterhalb der nicht-systematischen Generatormatrix (GN) in die Codiermatrix (CM) kopiert.
   d) An den zweiten Generatorteil (GT2) wird rechts in der Codiermatrix (CM) eine erste Einheitsmatrix (E1) anhängt, wobei ein Rang der Einheitsmatrix (E1) einer Zeilenanzahl des zweiten Generatorteils (GT2) entspricht, wobei
   zusätzlich die Zeilen der Codiermatrix (CM), die den zweiten Generatorteil (GT2) und die Einheitsmatrix (E1) umfassen, zeilenweise in die erste Matrix (M1) kopiert werden.

3. Verfahren nach einem der vorhergehenden Ansprüche,
   **dadurch gekennzeichnet, dass**
   für mehrere systematische Blockcodes (BC1, BC2) mit einer ersten und zweiten Generatormatrix (G1, G2), die vor einem nicht-systematischen Blockcode (BCN) mit einer nicht-systematischen Generatormatrix (GN) ausgeführt werden, folgende Schritte zur Erstellung der Codiermatrix (CM) durchgeführt werden:

   a) Für die erste Generatormatrix (G1) des ersten systematischen Blockcodes (BC1), welcher direkt vor dem nicht-systematischen Blockcode (BCN) ausgeführt wird, und für die nicht-systematische Generatormatrix (GN) wird gemäss Anspruch 2 die Codiermatrix (CM) ermittelt;
   b) Die zweite Generatormatrix (G2) des zweiten systematischen Blockcodes (BC2), der vor dem ersten systematischen Blockcode (BC1) ausgeführt wird, wird derart in die Codiermatrix (CM) einfügt, dass

   - aus der zweiten Generatormatrix (G2) derjenige zweite Generatorteil (GT2(G2)) extrahiert wird, der die Paritätssymbole am Ausgang des zweiten systematischen Blockcodes (BC2) erzeugt,
   - dieser extrahierte zweite Generatorteil (GT2(G2)) zeilenweise an das Ende der Codiermatrix (CM) kopiert wird,
   - rechts des kopierten zweiten Generatorteils (GT2(G2)) wird eine zweite Einheitsmatrix (E2) eingefügt, wobei der Rang dieser zweiten Einheitsmatrix (E2) einer Zeilenanzahl des kopierten zweiten Generatorteils (GT2(G2)) entspricht,
   - rechts der eingefügten zweiten Einheitsmatrix (E2) die, aufgrund einer Zeilenlänge der nicht-systematischen Generatormatrix (GN), unbelegten Koeffizienten (N) mit Null belegt werden, wobei
   zusätzlich die Zeilen der Codiermatrix (CM), die den zweiten Generatorteil (GT2(G1)) der ersten Generatormatrix (G1)und den zweiten Generatorteil (GT2(G2)) der zweiten Generatormatrix (G2) umfassen, zeilenweise in die erste Matrix (M1) kopiert werden.

4. Verfahren nach Anspruch 3,
   **dadurch gekennzeichnet, dass**
   ein nicht-systematischer Raptorcode eingesetzt wird, wobei der erste und zweite systematische Blockcode (BC1, BC2) jeweils einem der äusseren Codes, und der nicht-systematische Blockcode (BCN) dem inneren Code des Raptorcodes entspricht.

5. Verfahren nach Anspruch 3,
   **dadurch gekennzeichnet, dass**
   ein systematischer Raptorcode eingesetzt wird, bei dem

- der erste und zweite systematische Blockcode (BC1, BC2) jeweils einem der äusseren Codes, und der nicht-systematische Blockcode (BCN) dem inneren Code des Raptorcodes entspricht

- eine Korrekturmatrix (G0) eines nicht-systematischen Blockcodes (BC0) vor den zweiten systematischen Blockcode (BC2) zum Erstellen von systematischen codierten Symbolen (CC) eingefügt wird.

6. Verfahren nach Anspruch 1,
**dadurch gekennzeichnet, dass**
als Blockcode (BC) ein nicht-systematischer Blockcode verwendet wird,
die Codematrix (CM) durch Kopieren der Generatormatrix (G) erstellt wird.

7. Verfahren nach Anspruch 1,
**dadurch gekennzeichnet, dass**
als Blockcode (BC) ein systematischer Blockcode verwendet wird,
die Codematrix (CM) durch Kopieren der Generatormatrix (G) erstellt wird.

8. Verfahren nach Anspruch 7 oder 5,
**dadurch gekennzeichnet, dass**
bei dem Erstellen der zweiten Matrix (M2) nur diejenigen Codesymbole (C) berücksichtigt werden, die den systematischen codierten Codesymbolen (CC) entsprechen.

9. Verfahren nach einem der vorhergehenden Ansprüche,
**dadurch gekennzeichnet, dass**
den Quellensymbolen (Q), codierten Codesymbolen (CC) und den Codesymbolen (C) binäre Werte oder Werte eines Galois-Felds (GF) zugewiesen werden.

10. Vorrichtung (V) zum Durchführen eines Verfahren zum Übertragen von Fehlerkorrektursymbolen (FKS), wobei codierte Codesymbole (CC) unter Verwendung einer Generatormatrix (G) eines Blockcodes (BC) generiert und die codierten Codesymbole (CC) von einer Sendevorrichtung (SV) zu einer Empfangsvorrichtung (EV) übertragen werden, wobei Übertragungsfehler (UEF) in den empfangenen Codesymbolen (C) auftreten, insbesondere nach einem der vorhergehenden Ansprüche,
**gekennzeichnet durch**,

- ein erstes Mittel (ML1) zum zeilenweisen Bilden einer erste und zweiten Matrix (M1, M2) aus einer von der Generatormatrix (G) abgeleiteten Codiermatrix (CM), wobei die i-te Zeile der Codiermatrix (CM) entweder in die erste Matrix (M1) für ein fehlerfrei empfangenes i-tes Codiersymbol (C) oder in die zweite Matrix (M2) für ein fehlerhaft empfangenes i-tes Codiersymbol (C) kopiert wird,
- ein zweites Mittel (ML2) zum Markieren jeder Zeile der zweiten Matrix (M2) mit einem Zeilenindex (SI) entsprechend einer Zeilennummer der Codiermatrix (CM),
- ein drittes Mittel (ML3) zum Transformieren der ersten Matrix (M1) **durch** elementare Zeilenumformungen und/oder Spaltentausch in eine dritte Matrix (M3) mit RG unabhängigen Zeilen (ZU), wobei RG einem Rang (RG) der ersten Matrix (M1) entspricht, und wobei bei Spaltentausch zusätzlich ein identischer Spaltentausch in der zweiten Matrix (M2) ausgeführt wird,
- ein viertes Mittel (ML4) zum Erstellen einer vierte Matrix (M4) **durch** Kopieren der Elemente der RG unabhängigen Zeilen (ZU) der dritten Matrix (M3) und **durch** Anfügen der Zeilen der zweiten Matrix (M2) nach den unabhängigen Zeilen (ZU),
- ein fünftes Mittel (ML5) zum Transformieren der vierten Matrix (M4) **durch** elementare Zeilenumformungen und/oder Spaltentausch in eine fünfte Matrix (M5), wobei RH unabhängige Zeilen (ZH) entstehen, wobei RH einem Rang (RH) der vierten Matrix entspricht und bei Zeilentausch auch die jeweiligen Zeilenindizes (ZI) getauscht und nur Zeilen mit Zeilenindizes eliminiert werden,
- ein sechstes Mittel (ML6) zum Detektieren derjenigen Zeilen in den RH unabhängigen Zeilen (ZH) der fünften Matrix (M5), die aufgrund der zweiten Matrix (M2) einen Zeilenindex (ZI) aufweisen,
- ein siebtes Mittel (ML7) zum eindeutigen Identifizieren jeweils eines codiertes Codesymbole (CC) anhand des jeweiligen detektierten Zeilenindizes (ZI), wobei das codierte Codesymbol (CC) in Form eines Fehlerkorrektursymbols (FKS) **durch** die Empfangsvorrichtung (EV) zur fehlerfreien Rekonstruktion der Quellensymbole (Q) angefordert und von der Sendevorrichtung (SV) übertragen wird.

11. Vorrichtung (V) nach Anspruch 10,
**gekennzeichnet durch**,

ein achtes Mittel (ML8), welches derart ausgestaltet ist, dass das Verfahren eines der Ansprüche 2 bis 9 durchführbar ist.

**12.** Endgerät (EG) mit einer Vorrichtung (V) nach Anspruch 10 oder 11.

**13.** Endgerät nach Anspruch 12, wobei das Endgerät ein tragbares Gerät nach einem Mobilfunkstandard, insbesondere nach GSM-Standard, UMTS-Standard oder DVB-Standard, ist.

**Claims**

**1.** A method for transmitting error correction symbols (FKS), wherein encoded code symbols (CC) are generated using a generator matrix (G) of a block code (BC) and the encoded code symbols (CC) are transmitted from a transmitting device (SV) to a receiving device (EV), wherein transmission errors (UEF) occur in the received code symbols (C), wherein the error correction symbols (FKS) to be transmitted are generated in accordance with the following steps:

- forming, line by line, a first and a second matrix (M1, M2) from an encoding matrix (CM) derived from the generator matrix (G) in such a manner that the i-th line of the encoding matrix (CM) is copied either into the first matrix (M1) for an error-free received i-th encoding symbol (C) or into the second matrix (M2) for an erroneously received i-th encoding symbol (C);
- marking each line of the second matrix (M2) with a line index (SI) corresponding to a line number of the encoding matrix (CM);
- transforming the first matrix (M1) by elementary line transformations and/or exchange of columns into a third matrix (M3) including RG-independent lines (ZU), wherein RG corresponds to a rank (RG) of the first matrix (M1), and wherein, when columns are exchanged, an identical exchange of columns is, in addition, performed in the second matrix (M2);
- creating a fourth matrix (M4) by copying the elements of the RG-independent lines (ZU) of the third matrix (M3) and by adding the lines of the second matrix (M2) including the line indices (ZI) after the independent lines (ZU);
- transforming the fourth matrix (M4) by elementary line transformations and/or exchange of columns into a fifth matrix (M5) in such a manner that RH-independent lines (ZH) are generated, wherein RH corresponds to a rank (RH) of the fourth matrix, and wherein, when lines are exchanged, the respective line indices (ZI) are exchanged as well and only lines having line indices are eliminated;
- detecting the lines in the RH-independent lines (ZH) of the fifth matrix (M5) which comprise a line index (ZI) based on the second matrix (M2);
- unambiguously identifying one encoded code symbol (CC) each by means of each detected line index (ZI), which code symbol is requested in the form of an error correction symbol (FKS) by the receiving device (EV) for error-free reconstruction of the source symbols (Q) and is transmitted by the transmitting device (SV).

**2.** The method according to claim 1,
**characterized in that**
the source symbols (Q) are initially encoded with a first generator matrix (G1) of a first systematic block code (BC1) and the symbols (I) encoded therefrom are encoded with a non-systematic generator matrix (GN) of a non-systematic block code (BCN), wherein the encoding matrix (CM) is generated by the following steps:

a) copying, line by line, the non-systematic generator matrix (GN) into the encoding matrix (CM);
b) dividing the first generator matrix (G1) into a first generator part (GT1) generating the source symbols (Q) and into a second generator part (GT2) creating the parity symbols (P);
c) copying, line by line, the coefficients of the second generator part (GT2) into the encoding matrix (CM) below the non-systematic generator matrix (GN);
d) adding a first unity matrix (E1) to the right of the second generator part (GT2) in the encoding matrix (CM), wherein a rank of the unity matrix (E1) corresponds to a number of lines of the second generator part (GT2), wherein, in addition, the lines of the encoding matrix (CM) comprising the second generator part (GT2) and the unity matrix (E1) are copied line by line into the first matrix (M1).

**3.** The method according to any one of the preceding claims,
**characterized in that**,
for a plurality of systematic block codes (BC1, BC2) including a first and a second generator matrix (G1, G2) which are executed prior to a non-systematic block code (BCN) including a non-systematic generator matrix (GN), the following steps are performed for creating the encoding matrix (CM):

a) for the first generator matrix (G1) of the first systematic block code (BC1) executed directly prior to the non-systematic block code (BCN), and for the non-systematic generator matrix (GN), determining the encoding matrix (CM) according to claim 2;

b) inserting the second generator matrix (G2) of the second systematic block code (BC2), which is executed prior to the first systematic block code (BC1), into the encoding matrix (CM) in such a manner that

- the second generator part (GT2(G2)), which generates the parity symbols at the output of the second systematic block code (BC2), is extracted from the second generator matrix (G2);
- this extracted second generator part (GT2(G2)) is copied line by line to the end of the encoding matrix (CM);
- a second unity matrix (E2) is inserted to the right of the copied second generator part (GT2(G2)), wherein the rank of this second unity matrix (E2) corresponds to a number of lines of the copied second generator part (GT2(G2));
- to the right of the inserted second unity matrix (E2), the coefficients (N), which are unassigned due to a line length of the non-systematic generator matrix (GN), are assigned zero, wherein, in addition, the lines of the encoding matrix (CM) comprising the second generator part (GT2(G1)) of the first generator matrix (G1) and the second generator part (GT2(G2)) of the second generator matrix (G2) are copied line by line into the first matrix (M1).

4. The method according to claim 3,
   **characterized in that**
   a non-systematic raptor code is employed, wherein the first and second systematic block codes (BC1, BC2) each correspond to one of the outer codes, and the non-systematic block code (BCN) corresponds to the inner code of the raptor code.

5. The method according to claim 3,
   **characterized in that**
   a systematic raptor code is employed, in which:

   - the first and second systematic block codes (BC1, BC2) each correspond to one of the outer codes, and the non-systematic block code (BCN) corresponds to the inner code of the raptor code,
   - a correction matrix (G0) of a non-systematic block code (BC0) is inserted before the second systematic block code (BC2) for creating systematic encoded symbols (CC).

6. The method according to claim 1,
   **characterized in that**

   - a non-systematic block code is used as block code (BC);
   - the code matrix (CM) is created by copying the generator matrix (G).

7. The method according to claim 1,
   **characterized in that**

   - a systematic block code is used as block code (BC);
   - the code matrix (CM) is created by copying the generator matrix (G).

8. The method according to claims 7 or 5,
   **characterized in that**
   when creating the second matrix (M2), only the code symbols (C) corresponding to the systematic encoded code symbols (CC) are taken into account.

9. The method according to any one of the preceding claims,
   **characterized in that**
   binary values or values of a Galois field (GF) are assigned to the source symbols (Q), encoded code symbols (CC) and code symbols (C).

**EP 1 720 275 B1**

10. A device (V) for performing a method for transmitting error correction symbols (FKS), wherein encoded code symbols (CC) are generated using a generator matrix (G) of a block code (BC) and the encoded code symbols (CC) are transmitted from a transmitting device (SV) to a receiving device (EV), wherein transmission errors (UEF) occur in the received code symbols (C), especially according to any one of the preceding claims,
**characterized by**:

- a first means (ML1) for forming, line by line, a first and a second matrix (M1, M2) from an encoding matrix (CM) derived from the generator matrix (G), wherein the i-th line of the encoding matrix (CM) is copied either into the first matrix (M1) for an error-free received i-th encoding symbol (C) or into the second matrix (M2) for an erroneously received i-th encoding symbol (C);
- a second means (ML2) for marking each line of the second matrix (M2) with a line index (SI) corresponding to a line number of the encoding matrix (CM);
- a third means (ML3) for transforming the first matrix (M1) by elementary line transformations and/or exchange of columns into a third matrix (M3) including RG-independent lines (ZU), wherein RG corresponds to a rank (RG) of the first matrix (M1), and wherein, when columns are exchanged, an identical exchange of columns is, in addition, performed in the second matrix (M2);
- a fourth means (ML4) for creating a fourth matrix (M4) by copying the elements of the RG-independent lines (ZU) of the third matrix (M3) and by adding the lines of the second matrix (M2) after the independent lines (ZU);
- a fifth means (ML5) for transforming the fourth matrix (M4) by elementary line transformations and/or exchange of columns into a fifth matrix (M5), wherein RH-independent lines (ZH) are generated, wherein RH corresponds to a rank (RH) of the fourth matrix, and wherein, when lines are exchanged, the respective line indices (ZI) are exchanged as well and only lines having line indices are eliminated;
- a sixth means (ML6) for detecting the lines in the RH-independent lines (ZH) of the fifth matrix (M5) which comprises a line index (ZI) based on the second matrix (M2);
- a seventh means (ML7) for unambiguously identifying one encoded code symbol (CC) each by means of the respective detected line index (ZI), wherein the encoded code symbol (CC) is requested in the form of an error correction symbol (FKS) by the receiving device (EV) for error-free reconstruction of the source symbols (Q) and is transmitted by the transmitting device (SV).

11. The device (V) according to claim 10,
**characterized by**
an eighth means (ML8) which is configured such that the method according to any one of claims 2 to 9 can be performed.

12. A terminal (EG) including the device (V) according to claims 10 or 11.

13. The terminal according to claim 12, wherein the terminal is a portable device according to a mobile radio standard, in particular, according to a GSM standard, UMTS standard or DVB standard.

**Revendications**

1. Procédé de transmission de symboles de correction d'erreur (FKS), dans lequel des symboles de code codés (CC) sont générés en utilisant une matrice génératrice (G) d'un code de bloc (BC) et les symboles de code codés (CC) sont transmis par un dispositif d'émission (SV) à un dispositif de réception (EV), des erreurs de transmission (UEF) apparaissant dans les symboles de code (C) reçus, les symboles de correction d'erreur (FKS) à transmettre étant générés selon les étapes suivantes :

- une première et une deuxième matrice (M1, M2) sont formées ligne par ligne à partir d'une matrice de codage (CM) dérivée de la matrice génératrice (G) de telle façon que la i$^{\text{ème}}$ ligne de la matrice de codage (CM) soit copiée soit dans la première matrice (M1) pour un i$^{\text{ème}}$ symbole de codage (C) reçu sans erreur, soit dans la deuxième matrice (M2) pour un i$^{\text{ème}}$ symbole de codage (C) reçu de manière erronée,
- chaque ligne de la deuxième matrice (M2) est marquée avec un indice de ligne (SI) correspondant à un numéro de ligne de la matrice de codage (CM),
- la première matrice (M1) est transformée par des opérations élémentaires sur les lignes et/ou un échange de colonnes en une troisième matrice (M3) de lignes indépendantes (ZU) de RG, RG correspondant à un rang (RG) de la première matrice (M1), et, en cas d'échange de colonnes, un échange de colonnes identique étant effectué en plus dans la deuxième matrice (M2),

18

- une quatrième matrice (M4) est créée en copiant les éléments des lignes indépendantes (ZU) de RG de la troisième matrice (M3) et en ajoutant les lignes de la deuxième matrice (M2) avec les indices de ligne (ZI) après les lignes indépendantes (ZU),

- la quatrième matrice (M4) est transformée par des opérations élémentaires sur les lignes et/ou un échange de colonnes en une cinquième matrice (M5) de telle façon que des lignes indépendantes (ZH) de RH soient produites, RH correspondant à un rang (RH) de la quatrième matrice, et, en cas d'échange de lignes, les indices de ligne (ZI) respectifs étant échangés aussi et seules les lignes avec des indices de ligne étant éliminées,

- dans les lignes indépendantes (ZH) de RH de la cinquième matrice (M5) sont détectées les lignes qui présentent un indice de ligne (ZI) sur la base de la deuxième matrice (M2),

- un symbole de code codé (CC) est identifié chaque fois sans ambiguïté par chaque indice de ligne (ZI) détecté, lequel symbole de code étant demandé sous la forme d'un symbole de correction d'erreur (FKS) par le dispositif de réception (EV) pour la reconstruction sans erreur des symboles source (Q) et transmis par le dispositif d'émission (SV).

**2.** Procédé selon la revendication 1,
**caractérisé en ce que**
les symboles source (Q) sont codés d'abord avec une première matrice génératrice (G1) d'un premier code de bloc systématique (BC1) et les symboles (I) codés obtenus sont codés avec une matrice génératrice non systématique (GN) d'un code de bloc non systématique (BCN), la matrice de codage (CM) étant générée par les étapes suivantes :

a) la matrice génératrice non systématique (GN) est copiée ligne par ligne dans la matrice de codage (CM) ;

b) la première matrice génératrice (G1) est divisée en une première partie génératrice (GT1) générant les symboles source (Q), et en une deuxième partie génératrice (GT2) créant les symboles de parité (P) ;

c) les coefficients de la deuxième partie génératrice (GT2) sont copiés ligne par ligne dans la matrice de codage (CM) sous la matrice génératrice non systématique (GN) ;

d) une première matrice unité (E1) est ajoutée à droite de la deuxième partie génératrice (GT2) dans la matrice de codage (CM), un rang de la matrice unité (E1) correspondant à un nombre de lignes de la deuxième partie génératrice (GT2), les lignes de la matrice de codage (CM), qui comprennent la deuxième partie génératrice (GT2) et la matrice unité (E1), étant en plus copiées ligne par ligne dans la première matrice (M1).

**3.** Procédé selon l'une des revendications précédentes,
**caractérisé en ce que**
pour plusieurs codes de bloc systématiques (BC1, BC2) avec une première et une deuxième matrice génératrice (G1, G2) qui sont exécutés avant un code de bloc non systématique (BCN) avec une matrice génératrice non systématique (GN), les étapes suivantes sont effectuées pour créer la matrice de codage (CM) :

a) pour la première matrice génératrice (G1) du premier code de bloc systématique (BC1) qui est exécuté directement avant le code de bloc non systématique (BCN), et pour la matrice génératrice non systématique (GN), la matrice de codage (CM) est déterminée conformément à la revendication 2 ;

b) la deuxième matrice génératrice (G2) du deuxième code de bloc systématique (BC2) qui est exécuté avant le premier code de bloc systématique (BC1), est insérée dans la matrice de codage (CM) de telle façon que

- la deuxième partie génératrice (GT2(G2)) qui génère les symboles de parité à la sortie du deuxième code de bloc systématique (BC2) est extraite de la deuxième matrice génératrice (G2),

- ladite deuxième partie génératrice (GT2(G2)) extraite est copiée ligne par ligne à la fin de la matrice de codage (CM),

- une deuxième matrice unité (E2) est insérée à droite de la deuxième partie génératrice (GT2(G2)) copiée, le rang de cette deuxième matrice unité (E2) correspondant à un nombre de lignes de la deuxième partie génératrice (GT2(G2)) copiée,

- à droite de la deuxième matrice unité (E2) insérée, les coefficients (N) qui ne sont pas affectés en raison d'une longueur de ligne de la matrice génératrice non systématique (GN) sont mis à zéro, les lignes de la matrice de codage (CM) qui comprennent la deuxième partie génératrice (GT2(G1)) de la première matrice génératrice (G1) et la deuxième partie génératrice (GT2(G2)) de la deuxième matrice génératrice (G2) étant en plus copiées ligne par ligne dans la première matrice (M1).

**4.** Procédé selon la revendication 3,
**caractérisé en ce que**
un code raptor non systématique est utilisé, les premier et deuxième codes de bloc systématiques (BC1, BC2) correspondant respectivement à un des codes externes et le code de bloc non systématique (BCN) correspondant au code interne du code raptor.

5. Procédé selon la revendication 3,
**caractérisé en ce que**
un code raptor systématique est utilisé, dans lequel

- les premier et deuxième codes de bloc systématiques (BC1, BC2) correspondent respectivement à un des codes externes et le code de bloc non systématique (BCN) correspond au code interne du code raptor,
- une matrice de correction (G0) d'un code de bloc non systématique (BC0) est insérée avant le deuxième code de bloc systématique (BC2) pour créer des symboles codés systématiques (CC).

6. Procédé selon la revendication 1,
**caractérisé en ce que**
un code de bloc non systématique est utilisé comme code de bloc (BC),
la matrice de codage (CM) est créée par copie de la matrice génératrice (G).

7. Procédé selon la revendication 1,
**caractérisé en ce que**
un code de bloc systématique est utilisé comme code de bloc (BC),
la matrice de codage (CM) est créée par copie de la matrice génératrice (G).

8. Procédé selon l'une des revendications 7 ou 5,
**caractérisé en ce que**
lors de la création de la deuxième matrice (M2), seuls les symboles de code (C) correspondant aux symboles de code codés (CC) systématiques sont pris en compte.

9. Procédé selon l'une des revendications précédentes,
**caractérisé en ce que**
des valeurs binaires ou des valeurs d'un champ de Galois (GF) sont affectées aux symboles source (Q), symboles de code codés (CC) et symboles de code (C).

10. Dispositif (V) de mise en oeuvre d'un procédé de transmission de symboles de correction d'erreur (FKS), dans lequel des symboles de code codés (CC) sont générés en utilisant une matrice génératrice (G) d'un code de bloc (BC) et les symboles de code codés (CC) sont transmis par un dispositif d'émission (SV) à un dispositif de réception (EV), des erreurs de transmission (UEF) apparaissant dans les symboles de code (C) reçus, en particulier selon l'une des revendications précédentes,
**caractérisé par**

- un premier moyen (ML1) pour former ligne par ligne une première et une deuxième matrice (M1, M2) à partir d'une matrice de codage (CM) dérivée de la matrice génératrice (G), la $i^{\text{ème}}$ ligne de la matrice de codage (CM) étant copiée soit dans la première matrice (M1) pour un $i^{\text{ème}}$ symbole de codage (C) reçu sans erreur, soit dans la deuxième matrice (M2) pour un $i^{\text{ème}}$ symbole de codage (C) reçu de manière erronée,
- un deuxième moyen (ML2) pour marquer chaque ligne de la deuxième matrice (M2) avec un indice de ligne (SI) correspondant à un numéro de ligne de la matrice de codage (CM),
- un troisième moyen (ML3) pour transformer la première matrice (M1) par des opérations élémentaires sur les lignes et/ou un échange de colonnes en une troisième matrice (M3) de lignes indépendantes (ZU) de RG, RG correspondant à un rang (RG) de la première matrice (M1), et, en cas d'échange de colonnes, un échange de colonnes identique étant effectué en plus dans la deuxième matrice (M2),
- un quatrième moyen (ML4) pour créer une quatrième matrice (M4) en copiant les éléments des lignes indépendantes (ZU) de RG de la troisième matrice (M3) et en ajoutant les lignes de la deuxième matrice (M2) après les lignes indépendantes (ZU),
- un cinquième moyen (ML5) pour transformer la quatrième matrice (M4) par des opérations élémentaires sur les lignes et/ou un échange de colonnes en une cinquième matrice (M5), des lignes indépendantes (ZH) de RH étant produites, RH correspondant à un rang (RH) de la quatrième matrice, et, en cas d'échange de lignes, les indices de ligne (ZI) respectifs étant échangés aussi et seules les lignes avec des indices de ligne étant éliminées,
- un sixième moyen (ML6) pour détecter les lignes dans les lignes indépendantes (ZH) de RH de la cinquième matrice (M5) présentant un indice de ligne (ZI) sur la base de la deuxième matrice (M2),
- un septième moyen (ML7) pour identifier chaque fois sans ambiguïté un symbole de code codé (CC) au moyen de l'indice de ligne (ZI) détecté respectif, le symbole de code étant demandé sous la forme d'un symbole de correction d'erreur (FKS) par le dispositif de réception (EV) pour la reconstruction sans erreur des symboles source (Q) et transmis par le dispositif d'émission (SV).

11. Dispositif (V) selon la revendication 10,
**caractérisé par**
un huitième moyen (ML8) qui est configuré de façon que le procédé selon l'une des revendications 2 à 9 puisse être mis en oeuvre.

12. Terminal (EG) comprenant un dispositif (V) selon l'une des revendications 10 ou 11.

13. Terminal selon la revendication 12, le terminal étant un appareil portable selon une norme de téléphonie mobile, en particulier selon la norme GSM, la norme UMTS ou la norme DVB.

FIG 1

FIG 2

FIG 3

BC1     BCN

Q         (G1)    I    (GN)    CC

FIG 4

| GN | CM |
|----|----|
| GT2 | E1 |

FIG 5

BC0    BC2    BC1    BCN

Q    (G0)    (G2)   I1   (G1)   I2   (GN)   CC

FIG 6

| GN | | CM |
|---|---|---|
| GT2(G1) | | E1 |
| GT2(G2) | E2 | N |

FIG 7

MG(V)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **M. P. C. FOSSORIER.** Iterative Reliability-Based Decoding of Low-Density Partiy Check Codes. *IEEE Journal on seleceted areas in communications,* Mai 2005, vol. 19 (5), 908 ff
- Handbook of Coding Theory (Volume I). Elsevier, 1998, vol. I, 15-18, 654, , 1215
- Specification Text for Systematic Raptor Forward Error Correction. *3GPP Draft; AHP205 Raptor Specification, 3rd Generation Partnership Project (3GPP),* 31. Marz 2005, vol. SA WG4
- An Efficient Maximum-Likelihood Decoding of LDPC Codes Over the Binary Erasure Channel. **VON D. BURSHTEIN et al.** IEEE Transactions on information theory. IEEE, 01. November 2004, vol. 50, 2837-2844
- **C. PRESTON.** *Ein Skript für Lineare Algebra I und II,* 2003, ISBN http://dhcp24-159.mathematik.uni-bielefeld.de/~preston/files/teaching/linalg/skripten/ linalg.pdf